# FASCICULE DE BREVET EUROPEEN

(11) **EP 1 445 129 B1**
(45) Date de publication et mention de la délivrance du brevet: **09.08.2006**
(21) Numéro de dépôt: 04290259.3
(22) Date de dépôt: 02.02.2004
(51) Int. Cl.: B60G 15/06

(54) **Dispositif de butée de suspension**
Anschlagspuffervorrichtung
Bump stop device

(30) Priorité: 10.02.2003 FR 0301555
(43) Date de publication de la demande: 11.08.2004
(73) Titulaire: Aktiebolaget SKF, 415 50 Göteborg (SE)
(72) Inventeur: Beghini, Eric, 37390 La Membrole (FR); Houdayer, Christophe, 37360 Semblancay (FR)
(74) Mandataire: Casalonga, Axel

(56) Documents cités:
- EP-A- 0 390 331
- DE-A- 19 921 695
- GB-A- 2 217 663
- US-A- 4 497 523
- US-A- 4 925 323
- US-A- 5 618 116
- PATENT ABSTRACTS OF JAPAN vol. 1998, no. 03, 27 février 1998 (1998-02-27) & JP 09 303474 A (NISSAN MOTOR CO LTD), 25 novembre 1997 (1997-11-25)

## Description

L'invention concerne le domaine des butées de suspension utilisées, en particulier, sur les véhicules automobiles dans les jambes de suspension télescopiques des roues directrices. La butée de suspension est généralement disposée dans la partie supérieure de la jambe de suspension, entre une coupelle inférieure, servant également de siège d'appui pour le ressort de suspension, et un bloc-support élastique. Le bloc-support élastique est composé d'éléments métalliques et d'élastomère et est solidaire de la caisse du véhicule. Le ressort de suspension est disposé autour de la tige d'un piston d'amortisseur dont l'extrémité, généralement l'extrémité de tige du piston, est solidaire du bloc-support élastique. La butée de suspension permet ainsi de transmettre des efforts axiaux entre le ressort et la caisse du véhicule tout en autorisant un mouvement angulaire relatif entre la coupelle d'appui du ressort, mobile en rotation, et le bloc-support élastique fixe solidaire de la caisse. Ce mouvement angulaire relatif peut découler d'un braquage de la roue directrice et/ou de la compression du ressort de suspension. Il est important de faciliter le transport et l'assemblage de la butée de suspension avec les pièces environnantes et en particulier avec la coupelle formant siège d'appui pour le ressort.

Le document FR-A-2 778 606 décrit une butée de suspension, comprenant un roulement formant butée axiale disposé entre une coupelle d'appui pour un ressort et un bloc-support élastique solidaire de la caisse du véhicule. Le roulement comprend une bague supérieure en contact avec le bloc-support élastique, et une bague inférieure en contact avec la coupelle d'appui. Le dispositif possède des moyens de retenue axiale de la coupelle d'appui pour le ressort en vue de constituer un ensemble unitaire, la bague supérieure supportant un organe d'étanchéité pourvu d'une partie active coopérant avec la coupelle d'appui. La partie active de l'organe d'étanchéité coopérant avec la coupelle d'appui pour le ressort assure la retenue axiale de ladite coupelle d'appui par rapport à la butée. On constitue ainsi un ensemble unitaire butée-coupelle sans pièce supplémentaire et sans augmentation de l'encombrement.

Toutefois, il est nécessaire que la bague supérieure du roulement soit de grande dimension avec une collerette radiale débordante importante.

La présente invention se propose d'utiliser une bague supérieure du roulement économique, légère et de forme simple.

Le dispositif de butée de suspension, selon un aspect de l'invention, est du type comprenant un roulement formant butée axiale disposé en un élément d'appui pour un ressort, apte à se déplacer angulairement avec le ressort. Le roulement comprend une bague supérieure en contact avec un capot supérieur de transmission des efforts principalement axiaux à un autre élément lié directement ou indirectement à un châssis de véhicule, et une bague inférieure en contact avec l'élément d'appui pour le ressort. Ledit dispositif possède des moyens de retenue axiale de l'élément d'appui en vue de constituer un ensemble unitaire, et des moyens d'étanchéité. Le dispositif comprend un organe annulaire comportant une lèvre d'étanchéité, une portion de retenue sur le capot supérieur et une portion de retenue sur l'élément d'appui, la lèvre d'étanchéité étant distincte des portions de retenue. L'organe annulaire assure une triple fonction de retenue axiale, d'étanchéité dynamique et d'étanchéité statique.

La bague supérieure ne participe pas directement à la retenue et peut être très compacte. Les fonctions d'étanchéité dynamique et de retenue sont assurées par des portions différentes d'où une excellente étanchéité.

Avantageusement, l'organe annulaire est réalisé en matériau élastomère.

Dans un mode de réalisation de l'invention, l'organe annulaire est supporté par l'élément d'appui. L'organe annulaire assure une étanchéité statique avec l'élément d'appui.

Dans un mode de réalisation de l'invention, la lèvre d'étanchéité est en contact avec la bague supérieure du roulement.

Dans un mode de réalisation de l'invention, la portion de retenue sur l'élément d'appui est en saillie et en contact dans une rainure dudit élément d'appui.

Dans un mode de réalisation de l'invention, la portion de retenue sur le capot supérieur est en saillie dans une rainure du capot supérieur tout en étant distante dudit capot supérieur.

Dans un autre mode de réalisation de l'invention, l'organe annulaire est supporté par le capot supérieur.

Dans un mode de réalisation de l'invention, la lèvre d'étanchéité est en contact avec la bague inférieure du roulement.

Dans un mode de réalisation de l'invention, la portion de retenue sur l'élément d'appui est en saillie dans une rainure du capot supérieur tout en étant distante dudit élément d'appui.

Dans un mode de réalisation de l'invention, la portion de retenue sur le capot supérieur est en saillie et en contact dans une rainure du capot supérieur.

Dans un mode de réalisation de l'invention, les portions de retenue sont continues ou discontinues.

Dans un mode de réalisation de l'invention, l'organe annulaire est surmoulé sur le capot supérieur ou l'élément d'appui.

Dans un mode de réalisation de l'invention, l'organe annulaire est comoulé avec le capot supérieur ou l'élément d'appui.

Dans un mode de réalisation de l'invention, l'élément d'appui sert de siège d'appui pour un ressort.

Dans un mode de réalisation de l'invention, le dispositif comprend une coupelle intermédiaire disposée entre l'élément d'appui et le ressort.

Le capot peut être en contact avec un élément supérieur, par exemple une coupelle supérieure, un bloc amortisseur, etc. On entend par capot une pièce de transmission de la charge principalement axiale du roulement à un autre dispositif. Le capot est en général pourvu d'une surface radiale ou tronconique à cet effet. Le capot est en contact direct avec le roulement par une surface, en général radiale, tronconique ou toroïdale.

L'invention sera mieux comprise à l'étude de la description détaillée de quelques modes de réalisation pris à titres d'exemples nullement limitatifs et illustrés par les dessins annexés, sur lesquels :

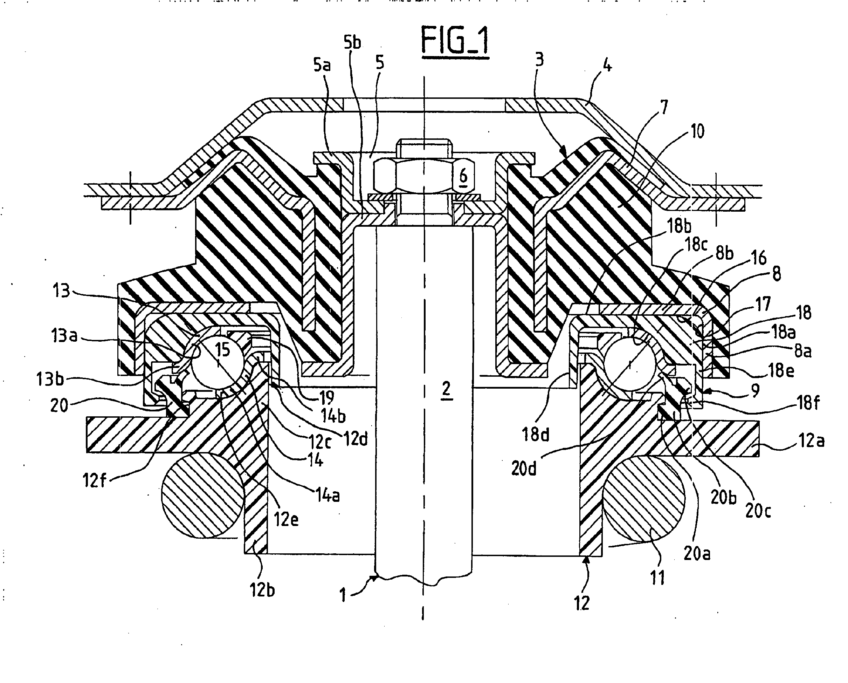

- la figure 1 est une vue en coupe axiale de la partie supérieure d'un système de suspension de véhicule, incluant une butée selon un aspect de l'invention;
- la figure 2 est une variante de la figure 1;
- la figure 3 est une vue de détail de la figure 1;
- la figure 4 est une vue de détail de la figure 2; et
- la figure est une vue en coupe axiale d'une butée selon un autre aspect de l'invention.

L'amortisseur 1 comprend un cylindre dans lequel peut coulisser un piston dont la tige 2 est liée par son extrémité supérieure à un bloc-support élastique 3. Le bloc-support élastique 3 est fixé à un élément du châssis 4 et comporte :
- un élément de liaison intérieur 5, réalisé en deux parties 5a et 5b et sur lequel vient se monter l'extrémité de la tige 2 du piston d'amortisseur au moyen d'un écrou 6,
- un élément de liaison extérieur 7 servant à la solidarisation avec le châssis 4,
- une coupelle supérieure 8 servant de siège d'appui pour le roulement de butée 9,
- un bloc de caoutchouc 10 adhérisé à la surface de ces trois pièces et réalisant une liaison entre celles-ci avec filtration des vibrations.

L'élément de liaison extérieur 7 est, à une extrémité, fixé au châssis 4, par exemple par boulonnage, et à l'autre extrémité est disposé axialement entre les deux parties 5a et 5b. La coupelle supérieure 8 est disposée axialement au niveau de l'élément de liaison intérieur 5, mais est de diamètre supérieur. On voit également le ressort de suspension 11 dont l'extrémité supérieure s'appuie sur un élément inférieur 12 qui, à son tour, s'appuie également sur le roulement de butée 9.

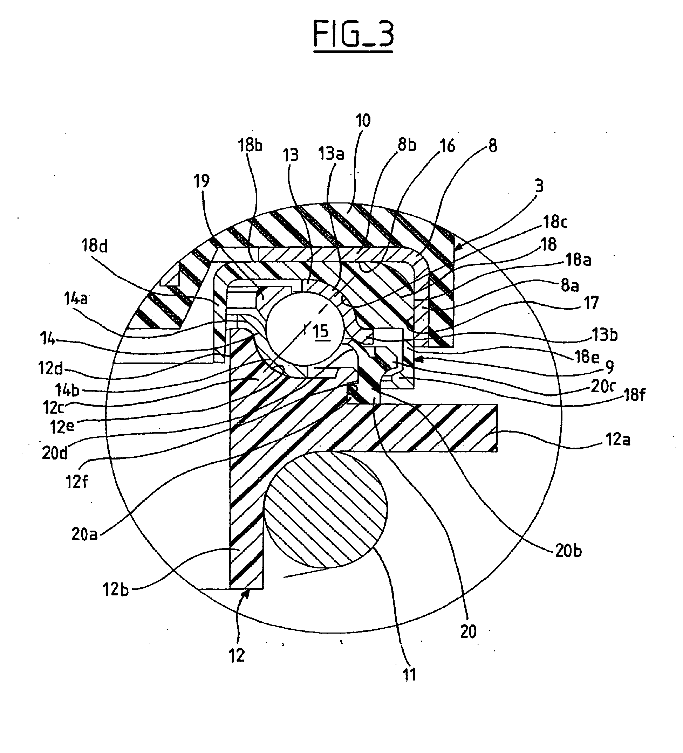

Comme on le voit mieux sur la figure 3, la coupelle supérieure 8 comprend une portion axiale cylindrique 8a s'étendant vers le bas, à l'opposé du châssis 4, et une portion radiale 8b s'étendant vers l'intérieur, offrant une portée d'appui 16 et une portée axiale 17. La butée de suspension 9, proprement dite, comprend une bague supérieure 13 et une bague inférieure 14 en tôle emboutie, entre lesquelles sont logées des billes 15.

Un capot supérieur 18 en matériau synthétique est disposé entre la coupelle supérieure 8 et la bague supérieure 13. Le capot supérieur 18 comprend une surface extérieure cylindrique 18a en contact avec la portion cylindrique 8a de la coupelle supérieure 8, une surface supérieure radiale 18b en contact avec la portion radiale 8b, une surface inférieure 18c en contact avec la bague supérieure 13, une jupe intérieure 18d s'étendant vers le bas à partir de la surface supérieure radiale 18b, et une jupe extérieure 18e s'étendant vers le bas à partir de la surface extérieure cylindrique 18a. La jupe extérieure 18e porte sur son alésage un bourrelet 18f. Le capot 18 transmet la charge axiale de la coupelle supérieure 8 à la bague supérieure 13, et assure le centrage et le maintien radial de la bague supérieure 13.

Les billes 15 du roulement de butée 9 sont maintenues par une cage 19 en matériau synthétique. La bague supérieure 13 comprend une portion toroïdale 13a formant piste de roulement pour les billes 15. La portion toroïdale 13a se prolonge vers l'extérieur par une portion arrondie 13b de concavité opposée. La portion toroïdale 13a est limitée vers l'intérieur au niveau du cercle fictif passant par le centre des billes 15.

La bague inférieure 14 comprend une portion toroïdale 14a formant une piste de roulement pour les billes 15 et se prolongeant vers l'intérieur par une portion toroïdale 14b supplémentaire de concavité opposée et en concordance de forme avec l'élément 12. La portion toroïdale 14a est limitée vers l'extérieur au niveau du cercle fictif passant par le centre des billes 15. Une bague 13 et une bague 14 peuvent être fabriquées par emboutissage et découpe d'un même disque de tôle.

La bague inférieure 14 et le ressort 11 sont en contact avec l'élément 12. L'élément inférieur 12 est de forme annulaire et peut être réalisé en matériau synthétique plastique éventuellement chargé de fibres. L'élément inférieur 12 comprend une portion radiale 12a qui s'étend vers l'extérieur, une jupe cylindrique intérieure 12b qui s'étend vers le bas et une courte portion supérieure 12c qui s'étend vers le haut. Le ressort 11 est en contact avec la surface inférieure de la portion radiale 12a et la surface extérieure de la jupe 12b.

La portion supérieure 12c possède un alésage 12d qui forme un passage étroit avec la jupe intérieure 18d du capot 18, une surface supérieure 12e en concordance de forme avec la bague inférieure 14, et une rainure circulaire 12f ouverte vers l'extérieur et disposée entre la surface supérieure 12e et la portion radiale 12a.

Un organe annulaire 20 réalisé en matériau élastique tel qu'un élastomère est supporté par l'élément inférieur 12. L'organe annulaire 20 comprend un talon rectangulaire 20a en saillie dans la rainure 12f de l'élément inférieur 12 et en contact avec la surface supérieure de la portion radiale 12a, un corps 20b et un bourrelet 20c relativement épais en saillie vers l'extérieur présentant un diamètre extérieur supérieur au diamètre intérieur du bourrelet 18f de la jupe extérieure 18e et disposé au-dessus de façon à pouvoir interférer diamétralement avec ledit bourrelet 18f en cas de début de séparation de l'élément inférieur 12 et du capot 18 avant le montage de la butée dans l'ensemble auquel elle est destinée. L'organe annulaire 20 comprend également une lèvre d'étanchéité 20d relativement fine en saillie vers l'intérieur et vers le haut et venant en contact de frottement avec la surface inférieure de la portion arrondie 13b de la bague supérieure 13. La lèvre d'étanchéité 20c est issue d'une zone intérieure du corps 20b. Le bourrelet 20c est issu d'une zone extérieure du corps 20b. Le talon 20a est en concordance de forme avec la rainure 12f, ce qui assure la solidarisation de l'organe annulaire 20 et de l'élément inférieur 12 et l'étanchéité statique. L'organe annulaire 20 remplit une fonction d'étanchéité statique avec l'élément inférieur 12, une fonction d'étanchéité dynamique avec la bague supérieure 13, et une fonction de retenue axiale avec le capot 13 avant l'assemblage de la butée avec les pièces voisines.

L'organe annulaire 20 peut être fabriqué à part de l'élément inférieur 12 puis monté dessus. En variante, L'organe annulaire 20 peut être surmoulé sur l'élément inférieur 12. En variante, L'organe annulaire 20 peut être moulé avec l'élément inférieur 12 dans un procédé de bi-injection. La réalisation de l'organe annulaire 20 en un matériau différent de celui du capot 18 permet d'optimiser le choix du matériau à la fois pour ledit capot 18 et pour ledit anneau 20 suivant les fonctions mécaniques que ces éléments doivent assurer.

Ainsi, l'organe annulaire 20 réalisé dans un matériau plus souple que celui utilisé pour le capot 18, remplit une fonction d'étanchéité dynamique de haut niveau du côté extérieur par la lèvre d'étanchéité 20c notamment lors du fonctionnement de la butée à l'état monté, et une fonction de retenue axiale de l'élément 12 et du capot 18, et donc des bagues 13 et 14 et des billes 15 disposées entre l'élément 12 et le capot 18. Du côté intérieur moins exposé aux pollutions, l'étanchéité est assurée par le passage étroit entre le capot 18 et l'élément 12.

Le capot 18 est réalisé en un matériau relativement rigide, par exemple un polyamide 6.6 chargé de fibres de verre, afin d'avoir la résistance mécanique suffisante pour supporter les charges auxquelles il est soumis. A titre de variante, le talon 20a et le bourrelet 20c pourraient présenter des discontinuités dans le sens circonférentiel.

Lors de l'assemblage, l'organe annulaire 20 étant préalablement mis en place sur l'élément inférieur 12, on vient disposer la bague inférieure 14, les billes 15, la cage 19 et la bague supérieure 13 du roulement sur l'élément inférieur 12 puis on vient coiffer l'ensemble avec le capot supérieur 18. Le bourrelet 20c se rétrécit diamétralement au passage du bourrelet 18f puis reprend par élasticité sa forme initiale.

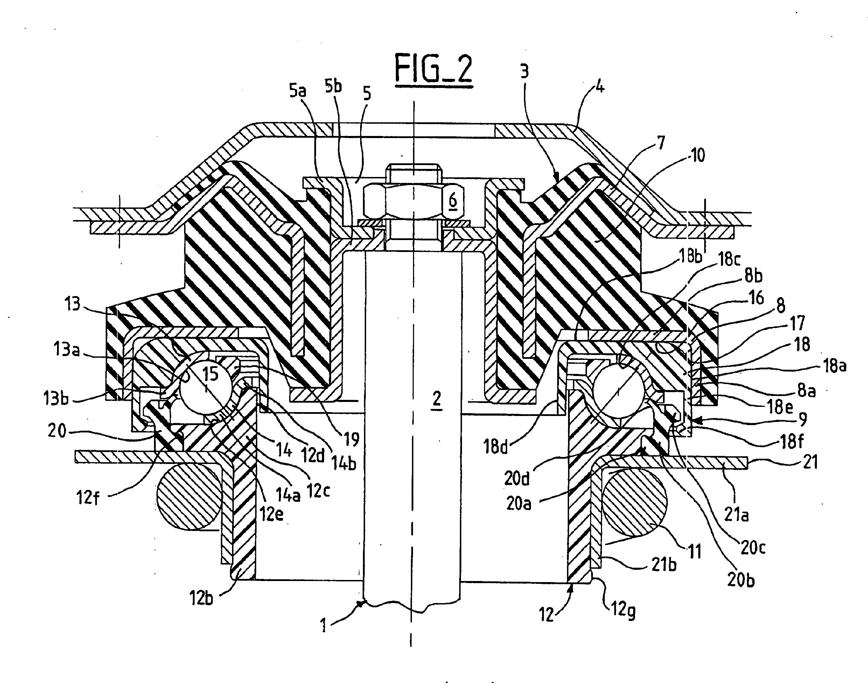

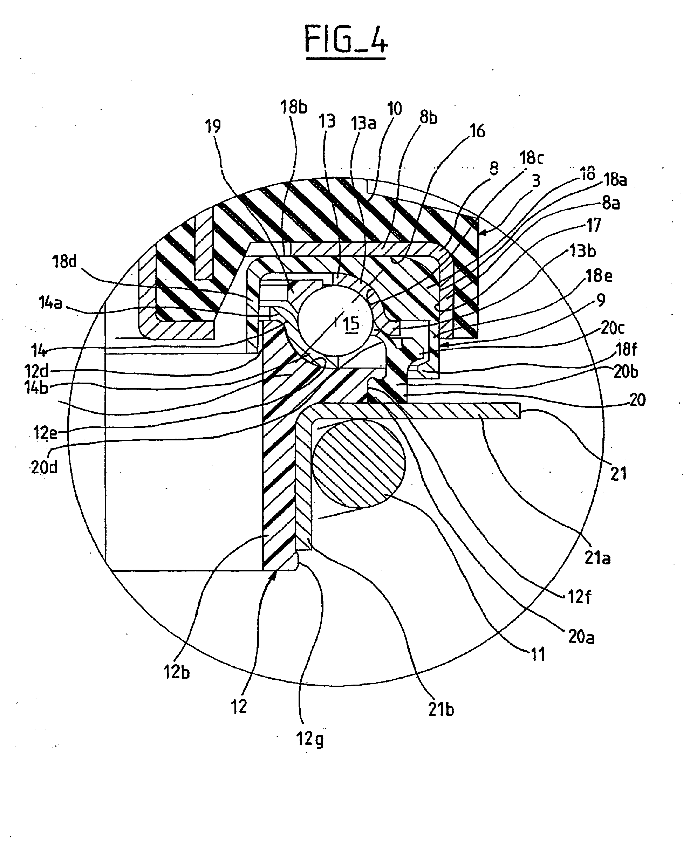

Dans la variante des figures 2 et 4, le talon 20a présente une forme plus arrondie concordante avec la rainure 12f dont le fond est plus large que l'entrée. Une coupelle 21 en tôle à section en L est disposée entre le ressort 11 et l'élément inférieur 12. La coupelle 21 comprend une portion radiale 21a qui remplace la portion radiale de l'élément inférieur 12 et est en contact avec l'organe annulaire 20 et une portion cylindrique 21b en contact avec la jupe 12b. La paroi inférieure de la rainure 12f est formée par la portion radiale 21a. La jupe 12b est pourvue sur l'extrémité inférieure de sa surface extérieure d'un léger bourrelet 12g garantissant la solidarisation, notamment axiale de la jupe 12b et de la coupelle 21.

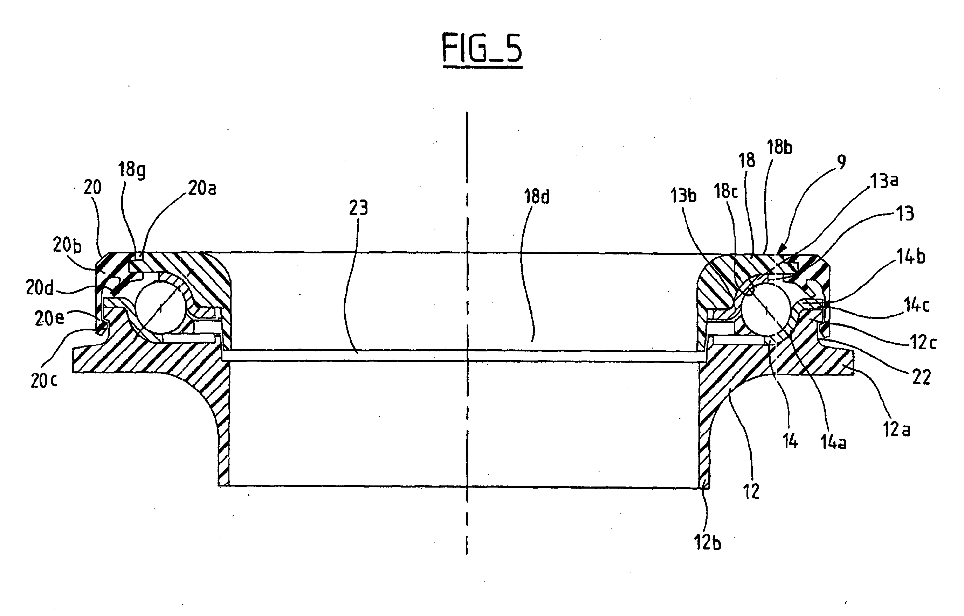

Dans le mode de réalisation illustré sur la figure 5, le capot 18 est dépourvu de jupe extérieure. Son extrémité de grand diamètre présente un épaulement 18g. La bague supérieure 13 est radialement intérieure et s'étend à partir du cercle fictif passant par le centre des billes 15 vers l'intérieur. La bague inférieure 14 est radialement extérieure et s'étend à partir du cercle fictif passant par le centre des billes 15 vers l'extérieur en se terminant par une courte portion radiale 14c. L'élément inférieur 12 comprend une portion radiale 12a qui s'étend vers l'extérieur, une jupe cylindrique intérieure 12b qui s'étend vers le bas et une courte portion supérieure 12c qui s'étend vers le haut à l'extérieur des billes 15 en épousant la forme de la bague inférieure 14. Une rainure annulaire 22 est ménagée dans la surface extérieure la portion supérieure 12c. Un chanfrein 23 formé à l'extrémité supérieure de l'alésage de la jupe 12b forme un passage étroit avec la jupe intérieure 18d du capot 18.

L'organe annulaire 20 est solidaire du capot 18 en étant supporté par l'épaulement 18g. L'organe annulaire 20 comprend une lèvre 20d issue du corps 20b, en contact de frottement avec la surface supérieure de la portion radiale 14c de la bague inférieure 14. L'organe annulaire 20 comprend une jupe extérieure cylindrique 20e issue du corps 20b tout en étant séparée de la lèvre 20d, qui s'étend axialement jusqu'au niveau de la rainure 22, et un bourrelet 20c formé dans l'alésage de la jupe extérieure 20e et s'étendant vers l'intérieur en saillie dans la rainure 22. Le bourrelet 20c présente un diamètre intérieur inférieur au diamètre extérieur de la portion supérieure 12c de l'élément inférieur 12. Avant l'installation de la butée dans l'ensemble auquel elle est destinée, en cas de début d'éloignement axial de l'élément inférieur 12 et du capot 18, le bourrelet 20c viendrait interférer avec la portion supérieure 12c de l'élément inférieur 12 en interdisant un démontage.

La retenue est assurée de façon efficace par le bourrelet. L'étanchéité est assurée par le frottement de la lèvre sur la surface plane de la bague inférieure 14. Le matériau du capot 18 peut être optimisé pour sa résistance aux efforts de compression transmis par la bague supérieure 13. Le matériau de l'organe annulaire 20 peut être optimisé pour sa souplesse, ce qui favorise l'étanchéité. Le bourrelet 20c est suffisamment résistant pour garantir la retenue des pièces de la butée en raison de son épaisseur et de la faible masse des pièces de la butée en jeu.

Grâce à l'invention, on obtient une butée de suspension facile à manipuler avant montage, ce qui réduit les coûts de fabrication du véhicule. Cette butée est très compacte, garantit une excellente étanchéité et ne comporte qu'un faible nombre de pièces. Les pièces de la butée sont assemblées de façon simple, en évitant le sertissage de pièces métalliques. Le matériau de l'organe annulaire 20 est optimisé pour assurer une bonne étanchéité statique et dynamique.

## Revendications

1. Dispositif de butée de suspension du type comprenant un roulement (9) formant butée axiale disposé en contact avec un élément d'appui (12) pour un ressort, apte à se déplacer angulairement avec le ressort, le roulement comprenant une bague supérieure (13) en contact avec un capot supérieur (18) de transmission de la charge appliquée au dispositif et une bague inférieure (14) en contact avec l'élément d'appui (12), ledit dispositif possédant des moyens de retenue axiale de l'élément d'appui en vue de constituer un ensemble unitaire, des moyens d'étanchéité et un organe annulaire (20) comportant une lèvre d'étanchéité (20d), et une portion de retenue sur l'élément d'appui **caractérisé par le fait que** l'organe annulaire comprend une portion de retenue sur le capot supérieur, la lèvre d'étanchéité (20d) étant distincte des portions de retenue.

2. Dispositif selon la revendication 1, **caractérisé par le fait que** l'organe annulaire (20) est supporté par l'élément d'appui (12).

3. Dispositif selon la revendication 2, **caractérisé par le fait que** la lèvre d'étanchéité est en contact avec la bague supérieure (13) du roulement.

4. Dispositif selon la revendication 2 ou 3, **caractérisé par le fait que** la portion de retenue sur l'élément d'appui est en saillie et en contact dans une rainure dudit élément d'appui (12).

5. Dispositif selon l'une quelconque des revendications 2 à 4, **caractérisé par le fait que** la portion de retenue sur le capot supérieur (18) est en saillie dans une rainure du capot supérieur (18) tout en étant distante dudit capot supérieur.

6. Dispositif selon la revendication 1, **caractérisé par le fait que** l'organe annulaire (20) est supporté par le capot supérieur (18).

7. Dispositif selon la revendication 6, **caractérisé par le fait que** la lèvre d'étanchéité (20d) est en contact avec la bague inférieure (14) du roulement.

8. Dispositif selon la revendication 6 ou 7, **caractérisé par le fait que** la portion de retenue sur l'élément d'appui (12) est en saillie dans une rainure (22) du capot supérieur (18) tout en étant distante dudit élément d'appui.

9. Dispositif selon l'une quelconque des revendications 6 à 8, **caractérisé par le fait que** la portion de retenue sur le capot supérieur (18) est en saillie et en contact dans une rainure du capot supérieur (18).

10. Dispositif selon l'une quelconque des revendications précédentes, **caractérisé par le fait que** les portions de retenue sont continues ou discontinues.

11. Dispositif selon l'une quelconque des revendications précédentes, **caractérisé par le fait que** l'organe annulaire est surmoulé sur le capot supérieur (18) ou l'élément d'appui (12).

12. Dispositif selon l'une quelconque des revendications 1 à 10, **caractérisé par le fait que** l'organe annulaire est comoulé avec le capot supérieur (18) ou l'élément d'appui (12).

13. Dispositif selon l'une quelconque des revendications précédentes, **caractérisé par le fait que** l'élément d'appui (12) sert de siège d'appui pour le ressort (11).

14. Dispositif selon l'une quelconque des revendications 1 à 12, **caractérisé par le fait qu'**il comprend une coupelle intermédiaire (21) disposée entre l'élément d'appui et le ressort (11).

## Claims

1. Suspension thrust bearing device of the type comprising a rolling bearing (9) forming an axial thrust bearing and arranged in contact with a supporting element (12) for a spring, capable of moving angularly with the spring, the rolling bearing comprising an upper race (13) in contact with an upper cap (18) for transmitting the load applied to the device, and a lower race (14) in contact with the supporting element (12), the said device having means for axially retaining the supporting element with the aim of constituting a unit assembly, sealing means and an annular member (20) comprising a sealing lip (20d) and a portion providing retention on the supporting element, **characterized in that** the annular member comprises a portion providing retention on the upper cap, the sealing lip (20d) being distinct from the retaining portions.

2. Device according to Claim 1, **characterized in that** the annular member (20) is supported by the supporting element (12).

3. Device according to Claim 2, **characterized in that** the sealing lip is in contact with the upper race (13) of the rolling bearing.

4. Device according to Claim 2 or 3, **characterized in that** the portion providing retention on the supporting element projects into and is in contact in a groove in the said supporting element (12).

5. Device according to any one of Claims 2 to 4, **characterized in that** the portion providing retention on the upper cap (18) projects into a groove in the upper cap (18) while being distant from the said upper cap.

6. Device according to Claim 1, **characterized in that** the annular member (20) is supported by the upper cap (18).

7. Device according to Claim 6, **characterized in that** the sealing lip (20d) is in contact with the lower race (14) of the rolling bearing.

8. Device according to Claim 6 or 7, **characterized in that** the portion providing retention on the supporting element (12) projects into a groove (22) in the supporting element (12) while being distant from the said supporting element.

9. Device according to any one of Claims 6 to 8, **characterized in that** the portion providing retention on the upper cap (18) projects into and is in contact in a groove in the upper cap (18).

10. Device according to any one of the preceding claims, **characterized in that** the retaining portions are continuous or discontinuous.

11. Device according to any one of the preceding claims, **characterized in that** the annular member is overmoulded onto the upper cap (18) or the supporting element (12).

12. Device according to any one of Claims 1 to 10, **characterized in that** the annular member is co-moulded with the upper cap (18) or the supporting element (12).

13. Device according to any one of the preceding claims, **characterized in that** the supporting element (12) serves as a seat for the spring (11).

14. Device according to any one of Claims 1 to 12, **characterized in that** it comprises an intermediate plate (21) arranged between the supporting element and the spring (11).

## Patentansprüche

1. Radaufhängungseinrichtung zu der gehören: ein ein axiales Winderlager bildendes Wälzlager (9), das für eine Feder in Berührung stehenden Federstützelement (12) eingefügt ist, in der Lage ist, sich mit der Feder in Umfangsrichtung zu drehen, und einen oberen Ring (13), der mit einem oberen Deckel (18) zum Übertragen der auf die Vorrichtung ausgeübten Kraft in Berührung steht, und einen mit dem Stützelement (12) in Berührung stehenden unteren Ring (14) aufweist, wobei die Vorrichtung axiale Haltemittel des Stützelements im Sinne der Erzeugung einer einheitlichen Baugruppe, Dichtungsmittel und ein ringförmige Element (20) enthält, das eine Dichtlippe (20d) und einen Halteabschnitt auf dem Stützelement aufweist, **dadurch gekennzeichnet, dass** das ringförmige Element einen Halteabschnitt auf dem oberen Deckel aufweist, wobei die Dichtlippe (20d) von den Halteabschnitten getrennt angeordnet ist.

2. Einrichtung nach Anspruch 1, **dadurch gekennzeichnet, dass** das ringförmige Element (20) durch das Stützelement (12) getragen wird.

3. Einrichtung nach Anspruch 2, **dadurch gekennzeichnet, dass** die Dichtlippe mit dem oberen Ring (13) des Wälzlagers in Berührung steht.

4. Einrichtung nach Anspruch 2 oder 3, **dadurch gekennzeichnet, dass** der Halteabschnitt auf dem Stützelement in eine Nut des Stützelements (12) ragt und mit diesem in

5. Einrichtung nach einem der Ansprüche 2 bis 4, **dadurch gekennzeichnet, dass** der Halteabschnitt auf dem oberen Deckel (18) in eine Nut des oberen Deckels (18) ragt, wobei er von dem oberen Deckel entfernt angeordnet ist.

6. Einrichtung nach Anspruch 1, **dadurch gekennzeichnet, dass** das ringförmige Element (20) durch den oberen Deckel (18) getragen wird.

7. Einrichtung nach Anspruch 6, **dadurch gekennzeichnet, dass** die Dichtlippe (20d) mit dem unteren Ring (14) des Wälzlagers in Berührung steht.

8. Einrichtung nach Anspruch 6 oder 7, **dadurch gekennzeichnet, dass** der Halteabschnitt auf dem Stützelement (12) in eine Nut (22) des oberen Deckels (18) ragt, wobei er entfernt von dem Stützelement angeordnet ist.

9. Einrichtung nach einem der Ansprüche 6 bis 8, **dadurch gekennzeichnet, dass** der auf dem oberen Deckel (18) angeordnete Halteabschnitt in eine Nut des oberen Deckels (18) vorspringt und mit diesem in Berührung steht.

10. Einrichtung nach einem der vorhergehenden Ansprüche, **dadurch gekennzeichnet, dass** die Halteabschnitte durchgehend oder unterbrochen sind.

11. Einrichtung nach einem der vorhergehenden Ansprüche, **dadurch gekennzeichnet, dass** das ringförmige Element auf den oberen Deckel (18) oder auf das Stützelement (12) aufgespritzt ist.

12. Einrichtung nach einem der Ansprüche 1 bis 10, **dadurch gekennzeichnet, dass** das ringförmige Element mit dem oberen Deckel (18) oder mit dem Stützelement (12) einstückig gespritzt ist.

13. Einrichtung nach einem der vorhergehenden Ansprüche, **dadurch gekennzeichnet, dass** das Stützelement (12) als Widerlager für die Feder (11) dient.

14. Einrichtung nach einem der Ansprüche 1 bis 12, **dadurch gekennzeichnet, dass** zu der Einrichtung eine Zwischerihülse (21) gehört, die zwischen dem Stützelement und der Feder (11) angeordnet ist.
